# EUROPEAN PATENT APPLICATION

(11) **EP 3 154 309 A1**
(43) Date of publication of application: **12.04.2017**
(21) Application number: 14870663.3
(22) Date of filing: 25.07.2014
(51) Int. Cl.: H04W 88/02

(54) **FACE RECOGNITION-BASED USE PERMISSION AND USER MODE CONTROL METHOD AND SYSTEM**

(30) Priority: 19.05.2014 CN 201410210666
(71) Applicant: Huizhou TCL Mobile Communication Co., Ltd., Huizhou, Guangdong 516006 (CN)
(72) Inventor: CHEN, Xiling, HuiZhou Guangdong 516006 (CN)
(74) Representative: Isarpatent
(86) International application number: PCT/CN2014/082971
(87) International publication number: WO 2015/176386

(57) **Abstract**

A method and system for controlling usage rights and user modes based on face recognition are provided. The method herein includes the steps: recognizing face data of a current user of the mobile terminal by a face-recognition technology; and providing a usage right and/or a user mode suited to an identity of the current user for the current user according to the recognized face data. The chance of misuse is decreased by the present invention.

## Description

### TECHNICAL FIELD OF THE INVENTION

The present invention relates to an intelligent terminal technology, and in particular to a method and system for controlling usage rights and user modes based on face recognition.

### BACKGROUND OF THE INVENTION

Intelligent terminals such as mobile phones have an increasing number of applications and functions, and there are also an increasing number of viruses and information on mobile phones. People pay, take private photos, chat, and perform other private behaviors with mobile phone in increasing numbers, and security issues arise accordingly. Whether a bank card is used inadvertently, whether private photos are seen inadvertently, whether chat logs are seen inadvertently by other people, and whether the applications of a mobile phone are installed or uninstalled inadvertently by children are what mobile phone users are worried about. Although a locking function of the mobile phone defends against these issues to a certain extent, in the unlocked state, there is still an opportunity for family, friends, and children to perform these actions, so that the important contents in the mobile phone of the user may be leaked or deleted.

Thus, there is a requirement to improve and develop the prior art.

### SUMMARY OF THE INVENTION

In view of the drawback of the prior art, an objective of the present invention is to provide a method and system for controlling usage rights and user modes based on face recognition, which aims to solve the problem that the prior art mobile terminal is easily misused by other users.

The technical solution of this invention is implemented as follows.

A method for controlling usage rights and user modes of a mobile terminal based on face recognition includes:
recognizing face data of a current user of the mobile terminal by a face-recognition technology; and
providing a usage right and/or a user mode suited to an identity of the current user for the current user according to the recognized face data;
wherein the step of providing the usage right suited to the identity of the current user for the current user according to the recognized face data comprises:
   when the user uses predetermined functions of the mobile terminal, acquiring a usage right grade of the predetermined functions, if the usage right grade of the predetermined functions belongs to the usage right grade of a stranger, then directly starting the predetermined functions corresponding to the usage right grade of the stranger;
   the step of providing the user mode suited to the identity of the current user for the current user according to the recognized face data comprises:
      analyzing a face information which is photographed, determining age and sex of the user, and automatically setting the user mode of the mobile terminal according to the age and sex of the user.

In the method for controlling usage rights and user modes of a mobile terminal based on face recognition, the step of providing the usage right suited to the identity of the current user for the current user according to the recognized face data further comprises:
if the usage right grade of the predetermined functions does not belong to the usage right grade of a stranger, then starting a camera of the mobile terminal to photograph, and comparing the obtained face information with a face information stored in the mobile terminal:
   when the usage right grade of the predetermined functions is the usage right grade of an administrator, and when the photographed face information belonging to the administrator is determined, then starting the predetermined functions corresponding to the usage right grade of the administrator; and
   when the usage right grade of the predetermined functions is the usage right grade of relatives and friends, and when the photographed face information belonging to the administrator or the relatives and friends is determined, then starting the predetermined functions corresponding to the usage right grade of the relatives and friends.

In the method for controlling usage rights and user modes of a mobile terminal based on face recognition, the step of acquiring the usage right grade of the predetermined functions further comprises: if the user does not have the usage right grade of the predetermined functions, then prompting that the user has no permission to use the predetermined function.

In the method for controlling usage rights and user modes of a mobile terminal based on face recognition, the user modes comprises a kid mode, a teenager mode, a young man mode, a young lady mode, and an elder mode.

A method for controlling usage rights and user modes of a mobile terminal based on face recognition, comprising:
recognizing face data of a current user of the mobile terminal by a face-recognition technology; and
providing a usage right and/or a user mode suited to an identity of the current user for the current user according to the recognized face data.

In the method for controlling usage rights and user modes of a mobile terminal based on face recognition, the step of providing the usage right suited to the identity of the current user for the current user according to the recognized face data comprises:
when the user uses predetermined functions of the mobile terminal, acquiring a usage right grade of the predetermined functions,
if the usage right grade of the predetermined functions belongs to the usage right grade of a stranger, then directly starting the predetermined functions corresponding to the usage right grade of the stranger; and
if the usage right grade of the predetermined functions does not belong to the usage right grade of a stranger, then starting a camera of the mobile terminal to photograph and obtain a face information of the user, and comparing the obtained face information with a face information stored in the mobile terminal, and executing the following steps:
   when the usage right grade of the predetermined functions is the usage right grade of an administrator, and when the photographed face information belonging to the administrator is determined, then starting the predetermined functions corresponding to the usage right grade of the administrator; and
   when the usage right grade of the predetermined functions is the usage right grade of relatives and friends, and when the photographed face information belonging to the administrator or the relatives and friends is determined, then starting the predetermined functions corresponding to the usage right grade of the relatives and friends.

In the method for controlling usage rights and user modes of a mobile terminal based on face recognition, the step of acquiring the usage right grade of the predetermined functions comprises if the user does not have the usage right grade of the predetermined functions, then prompting that the user has no permission to use the predetermined function.

In the method for controlling usage rights and user modes of a mobile terminal based on face recognition, the step of providing the user mode suited to the identity of the current user for the current user according to the recognized face data comprises: analyzing a face information which is photographed, determining age and sex of the user, and automatically setting the user mode of the mobile terminal according to the determined age and sex of the user.

In the method for controlling usage rights and user modes of a mobile terminal based on face recognition, the user modes comprises a kid mode, a teenager mode, a young man mode, a young lady mode, and an elder mode.

A system for controlling usage rights and user modes of a mobile terminal based on face recognition includes:
a control module configured to recognize face data of a current user of the mobile terminal by a face-recognition technology, and to provide a usage right and/or a user mode suited to an identity of the current user for the current user according to the recognized face data.

In the system for controlling usage rights and user modes of a mobile terminal based on face recognition, the control module comprises:
a usage right grade acquiring unit configured to acquire a usage right grade of predetermined functions when the user uses the predetermined functions of the mobile terminal, if the usage right grade of the predetermined functions belongs to the usage right grade of a stranger, then directly start the predetermined functions corresponding to the usage right grade of the stranger;
a photograph comparing unit, when the usage right grade of the predetermined functions acquired by the usage right grade acquiring unit does not belong to the usage right grade of a stranger, configured to start a camera of the mobile terminal to photograph and obtain a face information of the user, and to compare the obtained face information with a face information stored in the mobile terminal;
a function starting unit, when the usage right grade of the predetermined functions acquired by the usage right grade acquiring unit belongs to the usage right grade of an administrator, and when the photograph comparing unit determines that the photographed face information belongs to the administrator, configured to start the predetermined functions corresponding to the usage right grade of the administrator; and when the usage right grade of the predetermined functions acquired by the usage right grade acquiring unit belongs to the usage right grade of relatives and friends, and when the photograph comparing unit determines that the photographed face information belongs to the relatives and friends, to start the predetermined functions corresponding to the usage right grade of the relatives and friends.

In the system for controlling usage rights and user modes of a mobile terminal based on face recognition, the function starting unit is further configured to prompt that the user has no permission to use the predetermined functions when the user does not have the usage right grade of the predetermined function.

In the system for controlling usage rights and user modes of a mobile terminal based on face recognition, the control module is further configured to analyze a face information which is photographed, to determine age and sex of the user, and to automatically set the user mode of the mobile terminal according to the determined age and sex of the user.

In the system for controlling usage rights and user modes of a mobile terminal based on face recognition, the mobile terminal is a mobile phone.

The beneficial effects of the present invention are as follows: the present invention utilizes face-recognition technology to recognize the face of the user currently using the mobile terminal and to determine the identity of the user currently using the mobile terminal, and then determines whether the user has the usage right for using the predetermined functions according to the identity of the user. The corresponding predetermined functions can be used only when qualified, thereby reducing the chance of misuse. The user mode suited to the user's identity is provided for the user at the same time, thereby presenting different personalized interfaces.

### BRIEF DESCRIPTION OF THE DRAWINGS

FIG. 1 is a flow chart illustrating a method for controlling usage rights and user modes of a mobile terminal based on face recognition according to one preferred embodiment of the present invention; and
FIG. 2 is a block diagram illustrating a system for controlling usage rights and user modes of a mobile terminal based on face recognition according to one preferred embodiment of the present invention.

### DETAILED DESCRIPTION OF THE INVENTION

The present invention provides a method and system for controlling usage rights and user modes based on face recognition. Reference will now be made in detail to the invention, example of which is illustrated in the accompanying drawings. It should be understood that the specific embodiment described herein is merely utilized to explain the present invention but not to limit the present invention.

The method for controlling usage rights and user modes of a mobile terminal based on face recognition provided by the present invention includes the following steps of: recognizing face data of a current user of the mobile terminal by a face-recognition technology; and providing a usage right and/or a user mode suited to an identity of the current user for the current user according to the recognized face data. The heart of the present invention is that the face-recognition technology is used to distinguish the current user of the mobile terminal (i.e. user). Moreover, the usage right and/or user mode that is suited to the user's identity is provided for the user according to the identity of the current user, for allowing the owner to ensure that only authorized users can use the mobile terminal with the corresponding permission and acquire the user modes suited to themselves at the same time.

The method of the present invention will be described in detail accompanied with specific embodiments.

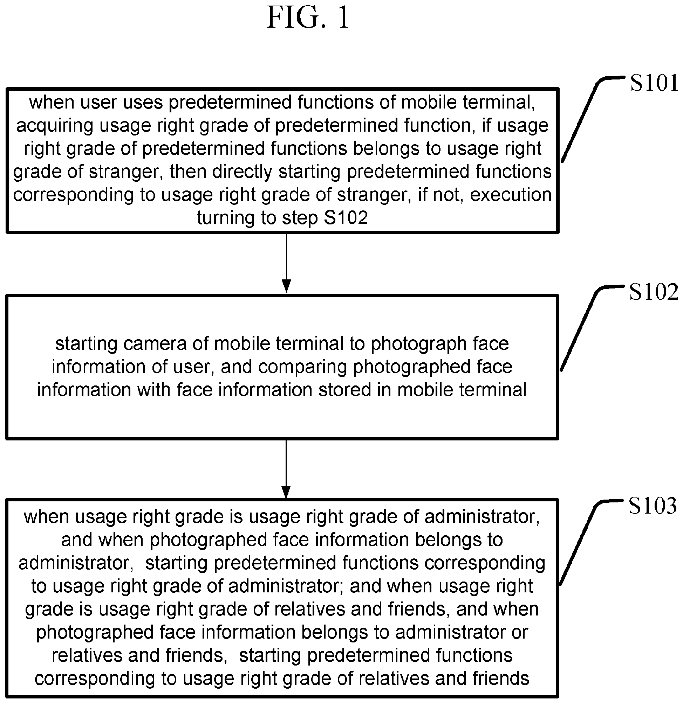

Refer to FIG. 1, which is a flow chart illustrating the steps of a preferred embodiment of the present invention for providing a usage right suited to the user's identity for the current user. As shown in FIG. 1, it includes the following steps of:
S101, when the user uses predetermined functions of the mobile terminal, acquiring a usage right grade of the predetermined functions, if the usage right grade of the predetermined functions belongs to the usage right grade of a stranger, then directly starting the predetermined functions corresponding to the usage right grade of the stranger, if not, execution turning to step S102;
S102, starting a camera of the mobile terminal to photograph and obtain a face information of the user, and comparing the obtained face information with a face information stored in the mobile terminal;
S103, when the usage right grade of the predetermined functions is the usage right grade of an administrator, and when the photographed face information belonging to the administrator is determined, starting the predetermined functions corresponding to the usage right grade of the administrator; and when the usage right grade of the predetermined functions is the usage right grade of relatives and friends, and when the photographed face information belonging to the administrator or the relatives and friends is determined, starting the predetermined functions corresponding to the usage right grade of the relatives and friends.

The present embodiment is realized based on the face recognition; face recognition is a relatively mature application. There are numerous ways to identify the presence of a human face, and further to determine the person's age and sex by the human face. The ways to detect the presence of human faces can employ an AdaBoost method which had been disclosed by those skilled in the art. There are feature vector and face-pattern template methods which are employed. The feature vector method is used to determine the size, location, distance and other characteristics of the outlines of the iris of the eye, the alae of the nose, the corners of the mouth, and other facial features, and then to calculate their geometric feature vectors. A set of these geometric feature vectors is composed of the geometric feature vectors describing the facial features. The main idea of the face-pattern template method is to store some standard face templates or facial organ templates in a database, and to collect a set of the feature vectors, etc. from a facial image under test for comparing it with the data of the templates.

The present invention is to determine different identities of the users by the face information, and to give different usage rights according to the determined identities.

First, in step S101, the face information of the administrator, relatives, and friends should be stored in the mobile terminal, and the usage rights of the administrator, relatives, and friends should be set in advance.

The administrator herein is usually a holder of the mobile terminal, and the usage right thereof can be set as follows: installing and uninstalling applications, automatic memorizing the passwords of bank accounts, "WeChat", "QQ" and other highly personal applications, allowing to set the usage rights of the mobile terminal, and allowing to read text messages, an address book, and other functions.

The relatives and friends usually use the mobile terminal of the holder, but just use some conventional applications, such as games, etc., and also can browse the album or address book and perform other functions. However, it does not memorize the passwords of bank accounts, "WeChat", "QQ" and other related applications, and cannot set the usage rights of the mobile terminal.

A stranger is not allowed to browse the album, address book and other functions, nor to memorize the passwords of bank accounts, "WeChat", "QQ" and other related applications, nor to set the usage rights of the mobile terminal, but only can use a few simple applications, such as certain gaming applications.

In specific, the setup includes the following steps of:
1, The mobile terminal performs a startup wizard for the first time, and prompts the user to do the face recognition. The mobile terminal turns on a front camera, records the face data, saves it to background files, and names "administrator" for the file. Thereafter this face will default to the owner of the mobile terminal, which has an administrator identity, by the mobile terminal.
2, There are administrator, relative or friend, stranger, and other modes to choose from. The user also can create a new usage mode.
3, The user clicks on the relative or friend mode, and the front camera of the mobile terminal photographs the face of the user. The face data is matched to the data of the "administrator" file in the background by using the face-recognition technology. If the match succeeds, the relative or friend mode is accessible, otherwise it is inaccessible. Similarly, entering the stranger model also requires a confirmation after the administrator is decrypted by the face-recognition technology.
4, After entering the relative or friend mode, the face of one required to be set as the relatives and friends is photographed for recording the face data, and it is stored in the background files with a filename "relative or friend 1". For example, the way of re-photographing another user and storing the data thereof to a file with a filename "relative or friend 2", and so on can set a number of relatives and friends. The face data of the relatives and friends can be recorded and stored to the background files.
5, The mobile terminal presets a number of usage right functions, such as installing and uninstalling applications, automatically memorizing the passwords of bank accounts, "WeChat", "QQ" and other highly personal applications, allowing to set the usage rights of the mobile terminal, and allowing to read the text messages and the address book. After entering the administrator, relative or friend, or stranger modes, different permissions can be set and chosen for individual needs.

When the user uses a certain predetermined functions of the mobile terminal, a usage right grade of the predetermined functions is acquired. If the usage right grade of the predetermined functions belongs to the usage right grade of a stranger, the predetermined functions corresponding to the usage right grade of the stranger are directly started. If not, execution turns to step S102. That is, if the predetermined functions can also be utilized by the stranger, there is no need to start the front camera for the face recognition; instead, the function is started directly.

In step S102, if the usage right grade of the predetermined functions belongs to the usage right grade of the relatives and friends or the administrator, the camera of the mobile terminal is started to photograph and obtain a face information of the user, and the photographed face information is compared with a face information stored in the mobile terminal.

In step S103, when the usage right grade of the predetermined functions is the usage right grade of the administrator, and if the photographed face information belongs to the administrator, the predetermined functions corresponding to the usage right grade of the administrator are started. If not, it indicates that the user has no the usage right grade of the predetermined functions, the user is prompted to have no permission to use the predetermined function. When the usage right grade of the predetermined functions is the usage right grade of the relatives and friends, and if the photographed face information belongs to the administrator or the relatives and friends, the predetermined functions corresponding to the usage right grade of the relatives and friends is started. That is, the administrator can utilize the predetermined functions of the relatives and friends, and the relatives and friends cannot use the predetermined functions of the administrator. If the user is determined to be a stranger, the user also cannot use the predetermined functions corresponding the relatives and friends.

The present invention can not only rely on face recognition to set different usage rights, but can also show different user modes according to the user's age and sex. Specifically, the step of providing the user mode suited to the identity of the current user for the current user according to the recognized face data includes: analyzing the photographed face information, determining the age and sex of the user, and automatically setting the user mode of the mobile terminal according to the determined age and sex of the user.

In specific implementation, the mobile terminal is started, turns on the front camera to photograph the face, and starts the face-recognition technology to recognize the age and sex of the user. The step is to analyze an age range belonging to the user, to obtain the user mode suited to the user according to the age range and gender data, and to save the variable of the user mode of the user. The mobile terminal obtains the variable of the user mode of the user, gets personalization functions of the user mode, and start a different interface according to the variable of the user mode when starting the corresponding interface and functions. For instance, in drawing a wallpaper, the wallpaper is depicted to correspond to the user mode. In drawing a standby screen, desktop shortcuts are depicted to correspond to the user mode. When playing power-on and power-off tones, the power-on and power-off tones corresponding to the user mode are played, and so on. In starting up the corresponding applications, different feedbacks are made depending on the distinct user modes.

The user modes herein include a kid mode, a teenager mode, a young man mode, a young lady mode, and an elder mode.
In which, the kid mode: 0~6 years old, gender: male, female;
the teenager mode: 7~17 years old, gender: male, female;
the young man mode: 18~50 years old, gender: male;
the young lady mode: 18~5 years old, gender: female;
the elder mode: more than 51 years old, gender: male, female.

Preferably, under the kid mode; fonts are large; standby wallpapers are cartoon wallpapers; the color of a main interface is green or yellow and other theme colors; the format of main menu icons is the style of a cute cartoon; power-on and power-off tones are children's songs; desktop shortcuts are set as common applications for kids, such as small games, applications of early childhood cartoons, animation, etc.; and an emergency call number is set to the number of their parents.

Under the teenager mode, the standby wallpapers are cartoon wallpapers or animated characters; the color of the main interface is green or yellow and other theme colors; the format of the main menu icons is the style of animated characters, such as Transformers and other popular animated characters; the power-on and power-off tones are children's songs; the desktop shortcuts are set as the common applications for teenagers, such as small games, animation, scientific knowledge, Mathematical Olympiad books, and other applications; and the emergency call number is set to the number of their parents and teachers.

Under the young man mode, the standby wallpapers are beauties or landscape wallpapers; the color of the main interface is black or blue and other theme colors; the format of the main menu icons is a common and easily identifiable style; the power-on and power-off tones are pure music; the desktop shortcuts are set as the common applications for young men, such as movies, economic and political forums, stocks, WeChat, QQ and other applications; and the emergency call number is set to the common emergency number.

Under the young lady mode, the standby wallpapers are handsome guys or landscape wallpapers; the color of a main interface is red or orange and other theme colors; the format of main menu icons is a common and easily identifiable style; the power-on and power-off tones are pure music; the desktop shortcuts are set as the common applications for young ladies, such as movies, Taobao, infant early education, WeChat, QQ and other applications; and the emergency call number is set to the common emergency number.

Under the elder mode; the fonts are large; the volume is the maximum volume; the standby wallpapers are opera characters, national figures, or landscape wallpapers; the color of the main interface is black or blue; the format of the main menu icons is a common and easily identifiable style; the power-on and power-off tones are folk; the desktop shortcuts are set as the common applications for elders, such as FM, MP3, chess, mahjong and other applications; and the emergency call number is set to the number of their sons and daughters.

Based on the above-mentioned method, the present invention further provides a preferred embodiment of a system for controlling usage rights and user modes of a mobile terminal based on face recognition. The system includes:
a control module which is configured to recognize face data of a current user of the mobile terminal by a face-recognition technology, providing a usage right and/or a user mode suited to an identity of the current user for the current user according to the recognized face data.

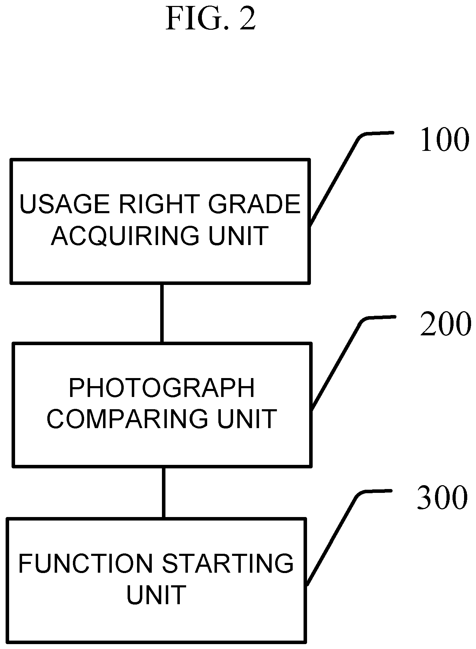

Furthermore, as shown in FIG. 2, the control module includes:
a usage right grade acquiring unit 100 which is configured to acquire a usage right grade of predetermined functions when the user uses the predetermined functions of the mobile terminal, if the usage right grade of the predetermined functions belongs to the usage right grade of a stranger, then directly start the predetermined functions corresponding to the usage right grade of the stranger;
a photograph comparing unit 200, when the usage right grade of the predetermined functions acquired by the usage right grade acquiring unit 100 does not belong to the usage right grade of a stranger, configured to start a camera of the mobile terminal to photograph and obtain a face information of the user, and to compare the obtained face information with a face information stored in the mobile terminal;
a function starting unit 300, when the usage right grade of the predetermined functions acquired by the usage right grade acquiring unit 100 belongs to the usage right grade of an administrator, and when the photograph comparing unit 200 determines that the photographed face information belongs to the administrator, configured to start the predetermined functions corresponding to the usage right grade of the administrator; and when the usage right grade of the predetermined functions acquired by the usage right grade acquiring unit 100 belongs to the usage right grade of relatives and friends, and when the photograph comparing unit determines that the photographed face information belongs to the relatives and friends, to start the predetermined functions corresponding to the relatives and friends.

Furthermore, the function starting unit 300 is further configured to prompt that the user has no permission to use the predetermined functions when the user does not have the usage right grade of the predetermined function.

Furthermore, the control module is further configured to analyze the photographed face information, to determine age and sex of the user, and to automatically configure the user mode of the mobile terminal according to the age and sex of the user.

Furthermore, the user modes include a kid mode, a teenager mode, a young man mode, a young lady mode, and an elder mode.

The technical details on the above module units have been described in detail in the previous method, so no further detail will be provided herein.

The mobile terminal of the present invention is a mobile phone, preferably.

In summary, the present invention utilizes face-recognition technology to recognize the face of the user currently using the mobile terminal and to determine the identity of the user currently using the mobile terminal, and then determines whether the user has the usage right for using the predetermined functions according to the identity of the user. The corresponding predetermined functions can be used only when qualified, thereby reducing the chance of misuse. The user mode suited to the user's identity is provided for the user at the same time, thereby presenting different personalized interfaces.

It should be understood that applications of the present disclosure are not limited to what is described above. Those of ordinary skill in the art may make modifications or variations according to the above description, and all of these modifications and variations are covered within the scope of the attached claims of the present disclosure.

## Claims

1. A method for controlling usage rights and user modes of a mobile terminal based on face recognition, comprising:
recognizing face data of a current user of the mobile terminal by a face-recognition technology; and
providing a usage right and/or a user mode suited to an identity of the current user for the current user according to the recognized face data;
wherein the step of providing the usage right suited to the identity of the current user for the current user according to the recognized face data comprises:
when the user uses predetermined functions of the mobile terminal, acquiring a usage right grade of the predetermined functions, if the usage right grade of the predetermined functions belongs to the usage right grade of a stranger, then directly starting the predetermined functions corresponding to the usage right grade of the stranger;
the step of providing the user mode suited to the identity of the current user for the current user according to the recognized face data comprises:
analyzing a face information which is photographed, determining age and sex of the user, and automatically setting the user mode of the mobile terminal according to the age and sex of the user.

2. The method for controlling usage rights and user modes of a mobile terminal based on face recognition according to claim 1, wherein the step of providing the usage right suited to the identity of the current user for the current user according to the recognized face data further comprises:
if the usage right grade of the predetermined functions does not belong to the usage right grade of a stranger, then starting a camera of the mobile terminal to photograph, and comparing the obtained face information with a face information stored in the mobile terminal:
when the usage right grade of the predetermined functions is the usage right grade of an administrator, and when the photographed face information belonging to the administrator is determined, then starting the predetermined functions corresponding to the usage right grade of the administrator; and
when the usage right grade of the predetermined functions is the usage right grade of relatives and friends, and when the photographed face information belonging to the administrator or the relatives and friends is determined, then starting the predetermined functions corresponding to the usage right grade of the relatives and friends.

3. The method for controlling usage rights and user modes of a mobile terminal based on face recognition according to claim 1, wherein the step of acquiring the usage right grade of the predetermined functions further comprises: if the user does not have the usage right grade of the predetermined functions, then prompting that the user has no permission to use the predetermined function.

4. The method for controlling usage rights and user modes of a mobile terminal based on face recognition according to claim 1, wherein the user modes comprises a kid mode, a teenager mode, a young man mode, a young lady mode, and an elder mode.

5. A method for controlling usage rights and user modes of a mobile terminal based on face recognition, comprising:
recognizing face data of a current user of the mobile terminal by a face-recognition technology; and
providing a usage right and/or a user mode suited to an identity of the current user for the current user according to the recognized face data.

6. The method for controlling usage rights and user modes of a mobile terminal based on face recognition according to claim 5, wherein the step of providing the usage right suited to the identity of the current user for the current user according to the recognized face data comprises:
when the user uses predetermined functions of the mobile terminal, acquiring a usage right grade of the predetermined functions,
if the usage right grade of the predetermined functions belongs to the usage right grade of a stranger, then directly starting the predetermined functions corresponding to the usage right grade of the stranger; and
if the usage right grade of the predetermined functions does not belong to the usage right grade of a stranger, then starting a camera of the mobile terminal to photograph and obtain a face information of the user, and comparing the obtained face information with a face information stored in the mobile terminal, and executing the following steps:
when the usage right grade of the predetermined functions is the usage right grade of an administrator, and when the photographed face information belonging to the administrator is determined, then starting the predetermined functions corresponding to the usage right grade of the administrator; and
when the usage right grade of the predetermined functions is the usage right grade of relatives and friends, and when the photographed face information belonging to the administrator or the relatives and friends is determined, then starting the predetermined functions corresponding to the usage right grade of the relatives and friends.

7. The method for controlling usage rights and user modes of a mobile terminal based on face recognition according to claim 6, wherein the step of acquiring the usage right grade of the predetermined functions comprises if the user does not have the usage right grade of the predetermined functions, then prompting that the user has no permission to use the predetermined function.

8. The method for controlling usage rights and user modes of a mobile terminal based on face recognition according to claim 5, wherein the step of providing the user mode suited to the identity of the current user for the current user according to the recognized face data comprises: analyzing a face information which is photographed, determining age and sex of the user, and automatically setting the user mode of the mobile terminal according to the determined age and sex of the user.

9. The method for controlling usage rights and user modes of a mobile terminal based on face recognition according to claim 8, wherein the user modes comprises a kid mode, a teenager mode, a young man mode, a young lady mode, and an elder mode.

10. A system for controlling usage rights and user modes of a mobile terminal based on face recognition, comprising:
a control module configured to recognize face data of a current user of the mobile terminal by a face-recognition technology, and to provide a usage right and/or a user mode suited to an identity of the current user for the current user according to the recognized face data.

11. The system for controlling usage rights and user modes of a mobile terminal based on face recognition according to claim 10, wherein the control module comprises:
a usage right grade acquiring unit configured to acquire a usage right grade of predetermined functions when the user uses the predetermined functions of the mobile terminal, if the usage right grade of the predetermined functions belongs to the usage right grade of a stranger, then directly start the predetermined functions corresponding to the usage right grade of the stranger;
a photograph comparing unit, when the usage right grade of the predetermined functions acquired by the usage right grade acquiring unit does not belong to the usage right grade of a stranger, configured to start a camera of the mobile terminal to photograph and obtain a face information of the user, and to compare the obtained face information with a face information stored in the mobile terminal;
a function starting unit, when the usage right grade of the predetermined functions acquired by the usage right grade acquiring unit belongs to the usage right grade of an administrator, and when the photograph comparing unit determines that the photographed face information belongs to the administrator, configured to start the predetermined functions corresponding to the usage right grade of the administrator; and when the usage right grade of the predetermined functions acquired by the usage right grade acquiring unit belongs to the usage right grade of relatives and friends, and when the photograph comparing unit determines that the photographed face information belongs to the relatives and friends, configured to start the predetermined functions corresponding to the usage right grade of the relatives and friends.

12. The system for controlling usage rights and user modes of a mobile terminal based on face recognition according to claim 11, wherein the function starting unit is further configured to prompt that the user has no permission to use the predetermined functions when the user has no the usage right grade of the predetermined function.

13. The system for controlling usage rights and user modes of a mobile terminal based on face recognition according to claim 10, wherein the control module is further configured to analyze a face information which is photographed, to determine age and sex of the user, and to automatically set the user mode of the mobile terminal according to the determined age and sex of the user.

14. The system for controlling usage rights and user modes of a mobile terminal based on face recognition according to claim 10, wherein the mobile terminal is a mobile phone.
